# EUROPEAN PATENT APPLICATION

(11) **EP 4 306 350 A1**
(43) Date of publication of application: **17.01.2024**
(21) Application number: 22204913.2
(22) Date of filing: 01.11.2022
(51) Int. Cl.: B60L 3/00, B60L 3/12

(54) **NEURAL NETWORK-BASED MONITORING OF COMPONENTS AND SUBSYSTEMS FOR POWER-DRIVEN PERSONAL MOBILITY VEHICLES**

(30) Priority: 15.07.2022 US 202263389489 P; 26.09.2022 US 202217952473
(71) Applicant: Sunrise Medical (US) LLC, Fresno, CA 93727 (US); Olson, John, Fresno, CA 93727 (US)
(72) Inventor: OLSON, John, Fresno 93727 CA (US); ROTH, Andrew, Fresno 93727 CA (US); FENSTERMAKER, John, Fresno 93727 CA (US)
(74) Representative: Holzwarth-Rochford, Andreas

(57) **Abstract**

A neural network model is in communication with a plurality of sensors to evaluate and determining an operating condition and/or life expectancy of one or more electrical or mechanical subsystems of personal mobility vehicle. The neural network model evaluates subsystem operation in the context of a personal mobility vehicle operational state to determine component status and generate an output indicative of one of component state of health or subsystem operation.

## Description

### BACKGROUND OF THE INVENTION

This invention relates in general to manual and power-driven personal mobility vehicles and, in particular, to determining the operating condition and life expectancy of the electronically-connected components and subsystems of a power-driven personal mobility vehicle.

Power-driven personal mobility vehicles include power wheelchairs, manual wheelchairs with add-on propulsion units and/or electrical subsystems, manually propelled wheelchairs, and scooters designed to aid mobility of disabled users. The power-driven personal mobility vehicles and manual wheelchairs with related power systems use electric motors and other electrical sub-systems to propel the vehicle. Power-driven personal mobility vehicles designed for disabled users may be the user's primary or only source of mobility in certain instances. If the wheelchair becomes inoperable because of an electrical sub-system failure the user is stranded. For these users, loss of operation equals loss of freedom, if not severe life-threatening situations.

Despite the potential loss of personal freedom, most users of power-driven personal mobility vehicles are not made aware of looming sub-system failures. A failure can become a crisis that is exacerbated by accompanied high costs for repair or replacement. In addition, the battery and other sub-systems like the motors and brakes of the power wheelchair are subject to aging and loss of performance. Manual wheelchairs typically rely on human power from either the user or an attendant to provide mobility. The mechanical subsystems of manual wheelchairs are also susceptible to failures that can limit a user's mobility. Subsystems such as wheel bearings, caster systems, and tires experience periodic problems.

What is needed is a health prediction method and associated system for the motor, battery, and other electrical, electro-mechanical, or mechanical subsystems of power- or manually- driven personal mobility vehicles that will allow for pro-active maintenance and repair.

Closely related is the ability of the battery to power the personal mobility vehicles. Although not a battery failure, when the battery is at the end of discharge the user could also be stranded and experience a loss of personal freedom. For example, conventional methods to measure battery capacity typically rely on simple battery terminal measurements, such as terminal voltage, to estimate a state of charge or charge level. This measurement does not accurately reflect a battery's ability to provide a sufficient voltage and current output to operate a wheelchair.

What is also needed is a method to monitor available battery parameters and generate an accurate prediction of a battery's state of charge.

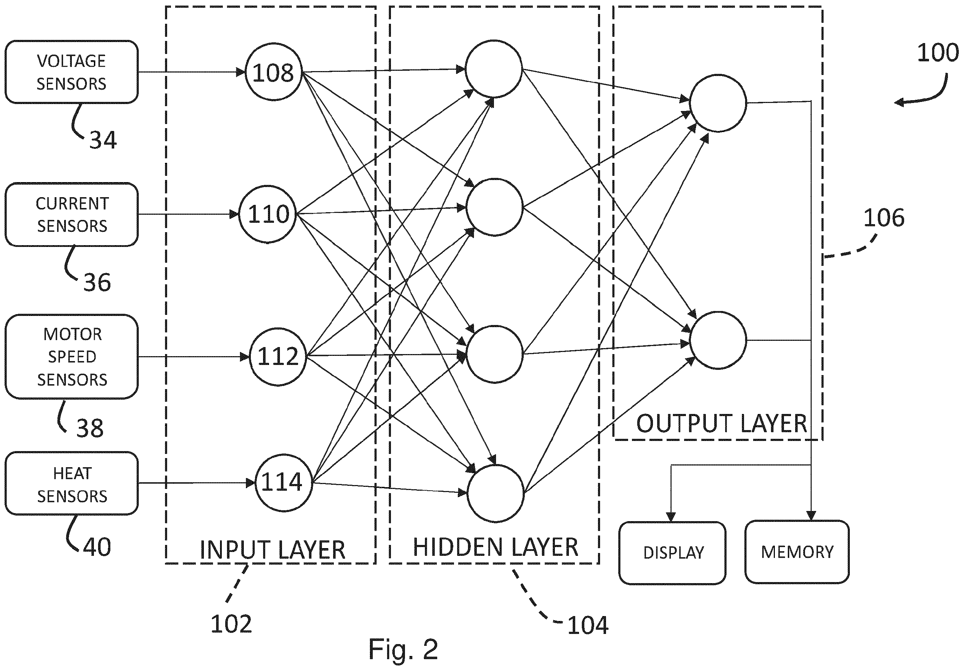

Neural network models are well-known in the prior art and considered mature in their current state of development. Neural networks were one of the first artificial intelligence methods developed and intended to emulate the brain by using interconnected nodes as shown in Fig. 2. They require no theory or existing model for use, but knowledge of the system is important to allow proper selection of input data.The neural network models are created using training input data. Ideally, the training (input) data sets are selected so as to represent all of the possible (or likely) operating states of the system over life. When training the neural network, the training data set includes the outputs (the answers). After training, the neural networks operate by calculating the output (answer) using independent real-time measurement of input data.

A great deal of effort has been devoted to developing neural network modeling technology, their architectures, and how to best solve them; and this work has matured significantly. These models are a highly developed mathematical tool that enable the monitoring of multiple subsystems for wear and failure. Neural network modeling software is available commercially, either discretely or as part of a larger mathematical software packages (e.g., Matlab).

It is thus one object of the claimed invention to further develop methods for health prediction for subsystems of power- or manually- driven personal mobility vehicles, in particular a motor, battery, and other electrical, electro-mechanical, or mechanical subsystems, preferably allowing for pro-active maintenance and repair. Regarding the specific subsystem of the battery it is the object of the claimed invention to monitor available battery parameters and generate an accurate prediction of a battery's state of charge.

### SUMMARY OF THE INVENTION

This invention relates to using the powerful capabilities of neural network models for accurately predicting the state of health of electrical, electro-mechanical, and mechanical subsystems in personal mobility vehicles such as power-driven or manual wheelchairs. The invention further provides for the monitoring of the wheelchair electrical and/or mechanical sub-systems and assessment of their state of continued operability.

This invention relates to methods and systems for determining the operating condition including but not limited to state of health of one or more electrical or mechanical systems of a personal mobility vehicle, such as a power-driven wheelchair or a manually operated wheelchair. Although a set of embodiments is described in the context of a power-driven wheelchair, the methods and systems disclosed herein are applicable to any personal mobility vehicle, and are not limited to power-driven wheelchairs. To function, any power-driven personal mobility vehicle uses multiple common electrical, mechanical, or electro-mechanical subsystems that are subject to wear and failure. These subsystems may include, but are not limited to, power drive motors, linear actuator motors, joystick and user input interface devices, batteries and battery chargers, electro-mechanical brakes and wiring harnesses, structural members, bearings, interface elements, and connectors. The operating condition and life expectancy may be determined by considering an individual electrical or mechanical system, and/or by considering the interactions of any of the foregoing electrical or mechanical systems with one other.

Neural network models are well-known for their use in systems that generate large amounts of data such as machine vision. However, their ability to form models from multiple input data allow them to be applied to any variety of calculation problems, including calculation of the state of health of an electrical or mechanical sub-system of a power-driven or manually driven personal mobility vehicle. In order to create a useful neural network model it is necessary to use input data that reflect the aging (wear) of the sub-system. For example, the electrical resistance of motor brushes is known to increase as the brushes age. Motor brush resistance data, obtained from either laboratory or field testing that reflects the wearing of the brushes can be used as input training data to create a neural network model. After the model is created, it is not modified or re-trained in actual operation, it exists as a static model. In operation, the calculated brush resistance (and possibly other indicators of brush wear) are used as input data to the static neural network model in order to calculate the current state of health of the motor brushes.

In some embodiments, a method of assessing an operational state of health for one or more electrical or mechanical subsystems of a power or manually-driven personal mobility vehicle comprises gathering input data from the one or more subsystems by using a plurality of sensors operatively coupled to a neural network model by a microcontroller. The neural network model processes the received input data to determine a calculated result or output for the one or more subsystems. The microcontroller can store the result in a computer-readable storage medium or transmit the digital result (output) data in any number of known ways common in the art. Alternatively, the data can be gathered and transmitted real-time to the cloud, where the computational processing can be done. According to some embodiments, the plurality of sensors includes, but is not limited to, one or more voltage sensors, one or more current sensors, one or more temperature sensors, one or more accelerometers, and/or one or more motor speed sensors. In some cases, the sensor derived data is used directly as raw input data for the models. In other cases, other input data are derived from the sensor data.

In certain embodiments, the microcontroller may have the capabilities of both a computer and a data acquisition system. It can have computer memory that holds the machine program that allows the system to function along with the neural network models and the capability to perform the necessary system monitoring calculations. In certain embodiments, the microcontroller functions to gather input data from the plurality of sensors, perform calculations on these input data, calculate additional derived input data, if needed, and then uses the neural network models to calculate the output results of state of health. The microcontroller may also provide additional input data in the form of a time base that can be used directly as input data or used to calculate other derived input data. In alternative embodiments, one or more of the calculations performed by the microcontroller may be performed remotely, such as in a cloud environment.

According to some embodiments, the calculated result relates to a specific subsystem state of health of a singular component such as a battery, a battery charger, a drive motor, an actuator motor, electro-mechanical parking brakes, or a wiring harness and connectors.

According to some embodiments, the calculated result comprises a range of values for a component state of health between 0 and 100 percent.

According to some embodiments, the microcontroller measures operation of the one or more power wheelchair electrical subsystems by accepting one or more inputs from a vehicle joystick, a caster position sensor, a vehicle speed sensor, voltage sensors, current sensors, temperature sensors, accelerometers, and/or a tire pressure sensor.

According to some embodiments, the microcontroller is configured to monitor a drive motor speed level and at least one of a drive motor current draw, and a drive motor operating temperature and transfer that information via a microcontroller to a neural network model for calculation. The neural network model is configured to produce an output that is indicative of a drive motor state of health condition.

In some embodiments, a power-driven personal mobility vehicle comprises at least one battery; at least one drive motor; and a microcontroller operatively coupled to a plurality of sensors and configured to measure at least voltage, current, and temperature input data associated with the at least one battery. The microcontroller uses the neural network model to determine at least one of a state of charge or a state of health of the at least one battery.

In some embodiments, a manually driven wheelchair comprising of two main propulsion wheels and two caster wheels that may be equipped with inertial sensors to measure acceleration forces applied by the user or resulting from interaction with the terrain. The sensors provides data to the neural network model to calculate an indication of overall wear and fatigue on the wheelchair frame and components.

According to some embodiments, the neural network model is created from a training (input) data set. The neural network model is designed to use the raw input data and other derived input data from operation of at least one electrical or mechanical subsystem of the power or manually-driven personal mobility vehicle. In some embodiments, a system for assessing an operational state of health for one or more subsystems of a power-driven personal mobility vehicle comprises a plurality of sensors operatively coupled to neural network models by a microcontroller, the plurality of sensors configured for monitoring the one or more subsystems, the neural network model configured for calculating state of health from the input data from the plurality of sensors.

A separate neural network model may be created for each electrical or mechanical subsystem in the wheelchair and may be independent from the other models. The neural network models are created using training input data obtained from a variety of means including, but not limited to, wheelchair laboratory testing, wheelchair field testing, or data created by calculations. The training input data is configured to reflect the wear over time of the electrical or mechanical subsystem to be monitored.

In some embodiments, a system is provided for assessing a state of charge for a battery comprising one or more battery modules. The state of charge of the battery reflects the charge of the battery from full charge (100% state of charge) to fully discharged (0% state of charge). The system comprises one or more battery voltage sensors operatively coupled to a neural network model by a microcontroller; one or more battery current sensors operatively coupled to the neural network model by a microcontroller; and one or more battery temperature sensors operatively coupled to the neural network model by a microcontroller. According to some embodiments, a battery temperature sensor operatively coupled to the neural network model by a microcontroller is indicative of a temperature measured on or near the outer case of the battery being used.

In one embodiment, the power-driven personal mobility vehicle is a powered wheelchair, and the battery power source is a lead acid battery. In other embodiments, the battery may be any secondary battery, including but not limited to a lithium-ion battery, a nickel metal hydride battery, or a nickel cadmium battery. A fuel cell may also be a power source. The powered wheelchair includes a microcontroller configured to measure designated parameters associated with battery charge level and battery health, and to output a status indicator of the battery state of health and state of charge.

In some embodiments, the components and subsystems of the power-driven personal mobility vehicle are monitored by the neural network model. For example, powered wheelchairs utilize DC motors having windings forming portions of the armature mechanism along with brushes and commutators to energize windings and stator magnets. The data regarding operation of these elements of the motor subsystem can include current draw, voltage drop across the terminals, motor speed and torque, unit temperature, resistance, and frequencies associated with load-based electrical signals. Measurement of these inputs can show how the elements are wearing and if they are within allowable operating parameters. For example, if the brushes are wearing or have become dirty or damaged, the resistance of the circuit of the brush and commutator will increase. This resistance increase will generate a corresponding increase in overall motor temperature and may cause the windings to demand increased current to achieve the desired motor operation. Other powered wheelchair sub-systems that can be monitored for state of health include: actuator motors, electro-mechanical brakes, the battery, the battery charger and wiring harnesses and connectors.

For manual wheelchairs, mechanical systems can also be monitored using neural networks. The addition of sensors on to a manual wheelchair can monitor forces, both dynamic and static in nature. The data can also be used to determine actual propulsion time, often referred to as bouts. The data from these sensors can then be used to determine loads and potential wear on mechanical components such as the frame or tires.

In some embodiments, the power-driven personal mobility vehicle is configured to include a microcontroller. The microcontroller implements neural network models of the electrical subsystems of the vehicle. The microcontroller measures voltage and current, 1) at the battery terminals, 2) from the charging unit, and 3) by the electric motors, over time; along with the temperature of the electrical subsystem over the same time basis as raw inputs to the neural network model. The microcontroller also calculates derived input data using various mathematical combinations of the raw input data. For example, the voltage across the motor brushes divided by the current flow through the brushes results in the resistance of the brushes. The resistance of the brushes in used as a derived input data for the associated neural network model.

In some embodiments, the output of the neural network models can be monitored remotely through a display device and/or an internet- based monitoring application. The data output can be transferred to the internet by any of a variety of means including but not limited to Wi-Fi, cellular networks, Bluetooth, Ethernet cables, serial cables and other data transfer cables. A State of Health (SoH) can be used to proactively identify worn subsystems of components for replacement before they fail or cause a degradation in the user experience. In practice, sensor measurement devices may have significant unit-to-unit variations in accuracy. In some embodiments, the controller and/or the manufacturing process may provide a calibration factor for each sensor measurement device, with the microcontroller applying the appropriate calibration factor(s).

In addition, the subsystem data can be used to generate an output parameter or data set from the neural network model that is used as input data to a system-level neural network model of the interactive subsystems to determine if operative connections between subsystems are functioning as expected.

In certain embodiments of the invention, a method of assessing an operational state of health of a personal mobility vehicle includes the steps of:
- training a neural network model with training input data reflecting a range of operating states of at least one of a component, a subsystem, or a wheelchair system of the personal mobility vehicle;
- gathering operating input data during operation from the one or more subsystems using at least one sensor to receive data measurements associated with an operational state of the one or more subsystems; and
- processing the operating input data in a microcontroller to generate additional derived input data using both the data measurements associated with the operational state of one or more subsystems and a time based input, and
- providing the derived input data to the neural network model and calculating an output indicative of the operational state of health for the at least one of the component, subsystem, or wheelchair system.

In addition or alternatively, in certain embodiments of the invention a method of assessing an operational state of health of a personal mobility vehicle is preferably conducted at least in part on a microcontroller or the like of the personal mobility vehicle. Such method comprises the steps of:
- gathering operating input data during operation from one or more component, subsystem, and/or wheelchair system using at least one sensor to receive data measurements associated with an operational state of the one or more component, subsystem, and/or wheelchair system;
- processing the operating input data in a microcontroller to generate additional derived input data using both the data measurements associated with the operational state of one or more component, subsystem, and/or wheelchair system and a time based input;
- providing the derived input data to a neural network model; and
- calculating an output indicative of the operational state of health for the at least one of the one or more component, subsystem, and/or wheelchair system optionally using the neural network model.

In this method the neural network model is optionally trained using a training data set, the training data set are training input data reflecting a range of operating states of at least one of a component, a subsystem, and/or a wheelchair system of the personal mobility vehicle (10) and/or the training data set preferably comprising:
(i) data reflecting derived input data for range of operating states of the one or more component, subsystem, and/or wheelchair system; and
(ii) data indicative of the operational state of health of the at least one of the component, subsystem, and/or wheelchair system corresponding to each data reflecting derived input data for the range of operating states, wherein preferably the data reflecting derived input data for range of operating states and data indicative of the operational state of health form data pairs for the one or more component, subsystem, and/or wheelchair system and/or for the operational states of health.

The training data set can comprise data pairs for at least one of: the one or more component, subsystem, and/or wheelchair system and/or for the operational states of health.

The data pairs for each of the one or more of the component, the subsystem, and/or the wheelchair system can comprise
(i) input data for a range of operating states and/or the data reflecting derived input data for a range of operating states; and associated thereto
(ii) operational states of health and/or data indicative of the operational state of health.

Furthermore, the data pairs may be separated with respect to the one or more component, subsystem, and/or wheelchair system.

The training data set can cover with its data pairs at least at least one, preferably two or more, parts of and/or the whole of the range of the operational states of health and/or operating states that are possible to occur during the operation and/or the life span/time of the respective one or more component, subsystem, and/or wheelchair system, in particular average and extreme operational states of health and/or operating states.

The training data set may be pre-normalized and/or pre-weighted. The training data set may comprise pairs that are equally or approximately distributed over the relevant range.

The relevant range can cover average and/or extreme operational states of health and/or operating states of at least one of the respective one or more component, subsystem, and/or wheelchair system.

In particular the training data set can be configured to represent data pairs of extreme and/or rare occurring operational states of health and/or operating states and of average and/or regularly occurring operational states of health and/or operating states at least partially equally or equally over the whole relevant range.

The method may further include the at least one sensor to be configured as one of a voltage sensor, a current sensor, a temperature sensor, or a motor speed sensor.

Alternatively, the at least one sensor may be configured as a plurality of sensors provided as one or more voltage sensors, one or more current sensors, one or more temperature sensors, and/or one or more motor speed sensors. The one or more subsystems may be configured to include a battery, a battery charger, one or more drive motors, one or more actuators, one or more electro-mechanical brakes, or one or more wiring harness and connectors.

In certain embodiments, the training step and/or the training of the neural network includes the neural network model being trained to reflect the range of operation states of the component configured as one of a battery, a battery charger, a drive motor, an actuator, an electro-mechanical brake, or a wiring harness and connectors. The output may comprise an expected range of values for SoH or SoC of 0 to 100% for a subsystem including a battery, a battery charger, a drive motor, an actuator,. an electro-mechanical brake, or a wiring harness and connectors.

In certain embodiments, the personal mobility vehicle is a manually propelled wheelchair and the step of gathering input data includes the one or more subsystems configured to include a manually propelled drive wheel, a tire, or a bearing. The manually propelled wheelchair may have the at least one sensor configured as one of a force sensor, an attitude sensor, a temperature sensor, or a tire pressure sensor.

In one aspect of the invention, the training step and/or the training of the neural network includes the neural network model configured as a single output neural network model. Alternatively, the neural network model may be configured as a multiple output neural network model.

In a further aspect of the invention the step of gathering operating input data includes:
(i) the at least one sensor configured as one of a voltage sensor, a current sensor, a heat and/or temperature sensor, a speed sensor, an accelerometer, a gyrometer, a force sensor, an attitude sensor, a torque sensor, an electrical and/or mechanical resistance sensor, a position sensor, in particular sensing the position of a control device, optionally in form of a joystick, a tire pressure sensor, and/or a motor speed sensor;
(ii) the at least one sensor configured as a plurality of sensors provided as one or more voltage sensors, one or more current sensors, one or more heat and/or temperature sensors, one or more speed sensors, one or more accelerometers, one or more gyrometers, one or more force sensors, one or more attitude sensors, one or more torque sensors, one or more electrical and/or mechanical resistance sensors, one or more position sensors, in particular sensing the position of one or more control devices, optionally in form of one or more joysticks, one or more a tire pressure sensors, and/or one or more motor speed sensors; and/or
(iii) the one or more subsystems configured to include a battery, a battery bank, optionally having batteries connected in series and/or parallel, a lead acid battery, a wet or flooded battery, an absorbent glass mat, AGM, battery, a gel battery, a lithium-ion battery, a nickel-metal-hydride, NiMH, battery, a nickel cadmium battery, a battery charger, a charging unit, one or more drive motors, one or more actuators, one or more electro-mechanical brakes, a control device, a joystick, or one or more wiring harness and connectors.

Alternatively or additionally, the training step and/or the training of the neural network model comprises the neural network model being trained to reflect the range of operation states of the one or more component, subsystem, and/or wheelchair system configured as one of the battery, the battery bank, the battery charger, the charging unit, the drive motor, the actuator, the electro-mechanical brake, the control device, the joystick, or the wiring harness and connectors and/or the neural network model is static, in particular is not modified and/or re-trained based on data received during operation.

In some embodiments the providing step includes the output comprising an expected range of values for SoH or SoC of 0 to 100% for the component, the subsystem, and/or the wheelchair system, in particular including the battery, the battery charger, the charging unit, the battery bank, the drive motor, the actuator, the electro-mechanical brake, the control device, the joystick, or the wiring harness and connectors.

In some embodiments the personal mobility vehicle is a manually propelled wheelchair and the step of gathering input data includes the one or more component, subsystems and/or wheelchair systems configured to include a manually propelled drive wheel, a tire, and/or a bearing.

Additionally or alternatively the personal mobility vehicle is a manually propelled wheelchair and the step of using the at least one sensor includes using a sensor configured as a force sensor, an attitude sensor, a temperature sensor, and/or a tire pressure sensor.

In some embodiments the method may comprise that the training step includes the neural network model (100) configured as a single output neural network model.

Alternatively or additionally in some embodiments the method may comprise that the training step includes the neural network model configured as a multiple output neural network model.

The invention may be embodied as a personal mobility vehicle that includes a microcontroller; a neural network model, and at least one sensor. The neural network model may reside in or be accessed by the microcontroller and configured to recognize an operating state of at least one of a component, a subsystem, or a wheelchair system of the personal mobility vehicle. The at least one sensor is configured to transmit data measurements associated with an operational state of the one or more subsystems. The data measurements are gathered as input data to be processed by the microcontroller to generate additional derived input data from the data measurements and a time based input. An output is calculated by the neural network model that is indicative of the operational state of health for the at least one of the component, subsystem, or wheelchair system.

In certain embodiments of the personal mobility vehicle, the at least one sensor is configured as one of a voltage sensor, a current sensor, a temperature sensor, or an attitude sensor. The personal mobility vehicle may be configured as a power driven wheelchair having at least one drive motor, a battery, and an input device. In certain embodiments, the at least one sensor is configured as a plurality of sensors provided as one or more voltage sensors, one or more current sensors, one or more temperature sensors, and/or one or more motor speed sensors. The plurality of sensors may measure a voltage level and a current output from at least one location of a battery terminal, a charging unit output terminal or an electric motor input connection, and the neural network model calculates a battery state of charge. The sensor measurements are taken over a time period and the neural network model determines a battery state of health. In one aspect of the invention, the neural network model is configured as a single output model.

In aspects where the personal mobility vehicle is a power driven wheelchair, the data measurements are a drive motor speed level and at least one of a drive motor current draw and a drive motor operating temperature, and the output is indicative of a drive motor state of health condition. Alternatively, the personal mobility vehicle may be configured as a manually propelled wheelchair comprising of two main propulsion wheels and two caster wheels. The at least one sensor may be provided as an inertial sensor configured to measure an acceleration force. In certain aspects, the at least one sensor further includes a force sensor and a speed sensor associated with each of the main propulsion wheel pushrims, the output being indicative of a rolling resistance of the manually propelled wheelchair. In other embodiments of the invention, the personal mobility vehicle may be configured as a manually propelled wheelchair that includes a power add-on unit and a battery. The at least one sensor may be a plurality of sensors configured to measure a voltage level and a current output from at least one location of a battery terminal, a charging unit output terminal or an electric motor input connection, and the neural network model calculating a battery state of charge.

The invention is further dealing with an personal mobility vehicle comprising:
- a microcontroller;
- a neural network model residing in or accessed by the microcontroller and/or configured to recognize an operating state of at least one of a component, a subsystem, and/or a wheelchair system of the personal mobility vehicle;
- at least one sensor configured to transmit data measurements associated with an operational state of the one or more component, subsystem, and/or wheelchair system, the data measurements gathered as input data processed by the microcontroller to generate additional derived input data from the data measurements and a time based input; and
- an output calculated by the neural network model indicative of the operational state of health for the at least one of the component, subsystem, and/or wheelchair system.

Additionally the at least one sensor of the personal mobility vehicle can be configured as one of a voltage sensor, a current sensor, a heat and/or temperature sensor, a speed sensor, an accelerometer, a gyrometer, a force sensor, a torque sensor, an electrical and/or mechanical resistance sensor, a position sensor, in particular sensing the position of a control device, optionally in form of a joystick, a tire pressure sensor, a motor speed sensor, and/or an attitude sensor.

Alternatively or additionally the personal mobility vehicle can be configured as a power driven wheelchair having at least one drive motor, a battery, and an input device, the at least one sensor configured as a plurality of sensors provided as one or more voltage sensors, one or more current sensors, one or more heat and/or temperature sensors, one or more speed sensors, one or more accelerometers, one or more gyrometers, one or more force sensors, one or more attitude sensors, one or more torque sensors, one or more electrical and/or mechanical resistance sensors, one or more position sensors, in particular sensing the position of one or more control devices, optionally in form of one or more joysticks, one or more a tire pressure sensors, and/or one or more motor speed sensors.

In some embodiments of the personal mobility vehicle, the plurality of sensors can measure a voltage level and a current output from at least one location of a battery terminal, a charging unit output terminal, a charging unit output terminal, and/or an electric motor input connection, and the neural network model can calculate a battery state of charge, wherein preferably the sensor measurements are taken over a time period and the neural network model determines a battery state of health, wherein optionally the neural network model is configured as a single output model.

In some embodiments of the personal mobility vehicle, the data measurements are a drive motor speed level and/or at least one of a drive motor current draw and a drive motor operating temperature, and/or the output being indicative of a drive motor state of health condition.

In some embodiments the personal mobility can be configured as a manually propelled wheelchair comprising at least two main propulsion wheels and/or two caster wheels and/or the at least one sensor is an inertial sensor configured to measure an acceleration force, wherein optionally the at least one sensor further includes a force sensor and/or a speed sensor associated with each of the main propulsion wheel pushrims, and/or the output being indicative of a rolling resistance of the manually propelled wheelchair.

In some embodiments the personal mobility can be configured as a configured as a manually propelled wheelchair, in particular including a power add-on unit and/or a battery, the at least one sensor being preferably a plurality of sensors configured to measure a voltage level and/or a current output from at least one location of a battery terminal, a charging unit output terminal and/or an electric motor input connection, and/or the neural network model calculating a battery state of charge.

Various aspects of this invention will become apparent to those skilled in the art from the following detailed description of the preferred embodiment, when read in light of the accompanying drawings

### BRIEF DESCRIPTION OF THE DRAWINGS

Fig. 1 is a schematic illustration of a power-driven personal mobility vehicle in the form of a wheelchair having a controller configured with a microcontroller containing neural network models in accordance with the invention.
Fig. 2 is a schematic illustration of a plurality of subsystem sensors providing input data to a neural network model which generates an output to one of a display or a memory/communication module.
Fig. 3 is a depiction of various subsystems associated with the wheelchair of Fig. 1.
Figs. 4A-4C are screenshot images of microcontroller output screens showing neural network model outputs of battery state of charge and state of health.
Fig. 5 is a table of electrical subsystems, associated sensor raw input data and calculated input data, and outputs.

### DETAILED DESCRIPTION

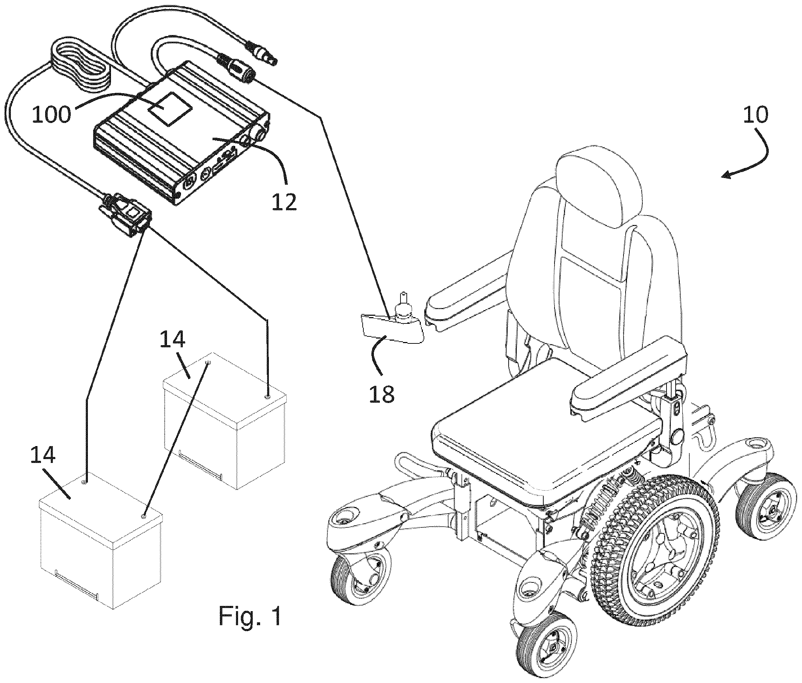

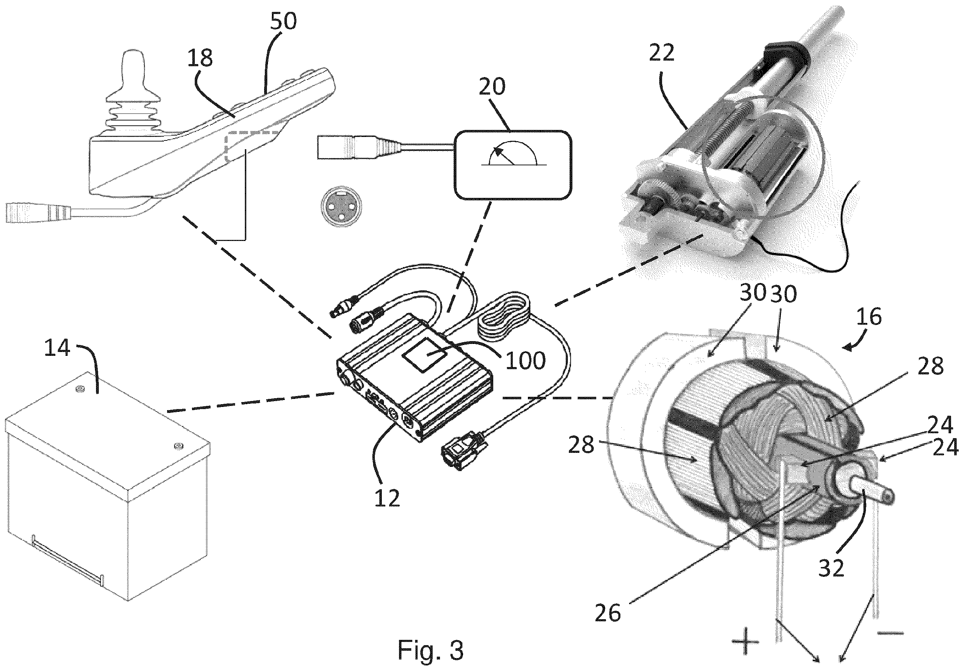

Referring now to the drawings, there is illustrated in Fig. 1 an example of a personal mobility vehicle shown generally at 10. The personal mobility vehicle 10 is shown as a power driven wheelchair, though the invention is applicable to power driven and manually operated personal mobility vehicles. The wheelchair 10 includes a controller or microcontroller 12 that includes or is in communication with a neural network model (NNM) 100, as shown in Fig. 2. In some embodiments, the NNM 100 is configured to monitor one or more electrical or mechanical subsystems of a power-driven personal mobility vehicle in accordance with the invention. In some embodiments, the wheelchair 10 includes a battery 14 as an energy source to power drive motors 16 that propel the wheelchair in response to user inputs from a control device, such as a joystick 18, and as shown in Fig. 3. These electrical and electro-mechanical subsystems are in communication with the controller 12 to operate the wheelchair in response to user command inputs. In addition, accessory systems such as charging units 20 that maintain battery power and actuators 22 are also connected to the controller 12 to operate in response to command inputs. Many of these subsystems include mechanical elements, such as bearings, windings, brushes, commutators and other contacts that impact the electrical response of the devices. In addition, sensors that may measure voltage, current, temperature, speed (rotational or linear), impedance, capacitance, resistance, vibration, and/or time are in communication with the controller 12. The NNM 100 receives one or more of these sensor outputs and evaluates the data through an algorithm constructed from training data in order to determine its state of health.

In one embodiment, the NNM 100 may measure parameters associated with the operation of an electric motor, such as one or more of the drive motors 16. One type of drive motor 16, as shown in Fig. 3, is a DC motor that includes brushes 24, commutator 26, windings 28, permanent magnets 30, and bearings 32. Other types of electric drive motors, such as variable reluctance motors, DC motors, AC motors, brushless DC or AC motors, may be used and remain within the scope of the invention. As the motor is commanded to propel the wheelchair 10, power is sent to the motor windings in a conventional manner to drive the armature and create motion. The power can be measured as a combination of voltage and current, which are examples of inputs that may be sent to the NNM 100. Based on the load demand of the wheelchair and the user input from the joystick, heat is created. The heat may be a function of several factors such as, for example, the rate of acceleration demanded by the user, mechanical resistance of the bearings 32, inertia of the wheelchair 10, and contact status of the brushes 24 and commutator 26. The NNM 100 receives some or all of these inputs, as depicted in the schematic illustration of Fig. 2, to determine if the drive motor subsystem is operating within an acceptable performance envelope or if a particular element is beginning to wear to excess.

As the NNM 100 receives data values for the measured or derived model input data, optionally via an input layer 102, the model determines, optionally via a hidden layer 104, outputs, optionally via an output layer 106, indicative of subsystem operation based on the trained algorithm of the model. For example, the drive motor 16, configured as a brushed DC motor, may include one or more voltage sensors 34, one or more current sensors 36, a motor speed sensor 38, and/or one or more temperature sensors 40. These sensors are used to generate raw data of motor performance, including motor winding or brush contact input voltage and current values, and operating temperature at a series of speeds. As the motor wears, these values will change over time. These performance data values also change with the load demand and speed of the motor. The NNM 100 receives the input data and is configured to determine the health state from 0 to 100%.

In the brush example, both conditions of worn brushes or a prolonged operational load demand - such as running up hill at a maximum speed condition - may lead to increased temperature measurements and high current draw. A variety of input data is used by the model to distinguish the actual condition from other possible or probable situations. To differentiate between worn brushes and high load demand, the NNM 100 may also include, for example, joystick position, motor speed, and brush resistance derived from the voltage and current levels transmitted to the brush and commutator circuit. Alternatively, other characteristics of diminished contact between the brushes and commutator may be an increase in local temperatures near the contact point. If the values of monitored parameters indicate wear, the NNM 100 may output a signal that motor maintenance is needed. The acceptable range may be a variable range that changes in response to other parameter values such as, for example, motor speed, joystick position, vehicle acceleration, temperature, or other variables.

In some embodiments, measurement data from the voltage sensors 34, current sensors 36, motor speed sensor 38, and temperature sensors 40 are used by the NNM 100 to calculate a State of Health (SoH) of the various subsystems. Resistance may be calculated by the microcontroller 12 using data from voltage sensors 34 and current sensors 36. For example, if the motor brushes are wearing or have become dirty or damaged, the resistance of the circuit of the brush and commutator will likely increase. This resistance increase will generate a corresponding increase in overall motor temperature as measured by the temperature sensors 40 for a predetermined operational demand, and may further cause the windings to demand increased current to achieve the desired motor operation. This increased current can be detected by the current sensors 36. Examples of other powered wheelchair sub-systems that can be monitored by the NNM 100 for SoH include actuator motors, electro-mechanical brakes, batteries, battery chargers, and wiring harnesses and connectors.

Mechanical systems, such as bearings and tires that affect rolling resistance in power wheelchair applications, can also have SoH status evaluated by the NNM 100. In an example of drive motor and gearbox operation for propelling a power-driven wheelchair, the NNM 100 may calculate health for motor power consumption parameters in the context of vehicle load demands and inertia states such as operating speed vs. command signal; travel path attitude - ascending, descending, or level operation; and travel path direction - turning or straight operation. As the motor load profile changes, these associated parameters are calculated by the NNM 100 to determine if the motor power requirements are commensurate with the operational situation or if a subsystem issue is adding to the motor demand. If the motor draw and other parameters associated with the chair operating conditions, a NNM 100 may further calculate inputs from other subsystem sensors to determine if a subsystem parameter is trending toward a low state of health indicating an outer bound of its operating envelope. For example, the NNM 100 input data may reflect that additional left turn joystick movement is required to travel in a straight line. If an attitude or path tracking sensor indicates generally level performance and tire pressure sensors indicate generally equal pressures for right and left sides, the NNM 100 may rely on input data of motor mechanical subsystems. The NNM 100 may evaluate inputs from caster swivel sensors to verify that the caster positions align with the travel path associated with the actual drive wheel speeds. If the track parameters indicate no system issues, then the NNM 100 may indicate a motor/drive gear low health condition. Certain embodiments may include additional sensors, such as temperature sensors or accelerometer data to more accurately pinpoint a specific component issue within the motor/gearbox subsystem.

In an example of monitoring a manually driven wheelchair system for rolling resistance, the NNM 100 may be configured to evaluate the status or operational health of bearings, tires, casters and other components affecting movement of the wheelchair. An embodiment of the NNM 100 configured to measure rolling element status such as tires or bearings may include a force sensor on the pushrim, speed sensor on wheels, and an attitude sensor to determine chair position and inertia. As manual drive force increases for a particular attitude such as a generally level or horizontal attitude and a particular speed, the NNM 100 may determine that operation of a rolling element is of low health.

When monitoring a power system, such as the battery 14, the NNM 100 can determine a State of Charge (SoC) and/or the SoH of the battery. The SoC can be defined as the amount of charge of the battery compared to a full charge state. In descriptive terms, the state of health is 100% for a new battery and 0% for a failed battery. In one example of battery performance metrics, the SoH can be defined as the full discharge capacity of a battery, in Amp-hours (Ah), divided by the initial (new) capacity of the battery in Ah. In one example, the microcontroller measures current, voltage, and temperature of the battery. Some additional parameters associated with battery SoH may be derived by calculations utilizing time-based metrics of operation.

The voltage of the battery 14 is measured by one or more voltage sensors 34 that supply input data to the NNM 100 through the microcontroller 12. Similarly, the current of the battery 14 is measured by one or more current sensors 36 that supply input data to the NNM 100 through the microcontroller 12. Additionally, the temperature of the battery 14 is measured using one or more temperature sensors 40 that supply input data to the NNM 100 through the microcontroller 12.

In one embodiment, the power-driven personal mobility vehicle is a powered wheelchair, and the battery 14 is a lead acid battery. Any type of lead acid battery is possible, including; wet or flooded, absorbent glass mat (AGM), or gel battery designs. Alternatively, the battery may be any electro-chemical storage device configured to store and release electrical power such as, for example, a lithium-ion battery, a nickel-metal-hydride (NiMH) battery or a nickel cadmium battery. In one embodiment, the battery 14 is a battery bank that includes a plurality of batteries 14, connected in series, in parallel, or in a combination of series and parallel, that may be arranged as battery modules. In a preferred battery embodiment, two 12V modules are connected in series to yield a 24V battery. The powered wheelchair may include a controller or microcontroller 12 configured to measure key data associated with battery charge level and battery health, to implement the NNM 100, and to output a status indicator of the battery 14 on a display 50. Alternatively or additionally, the battery status may be stored in a memory portion of the controller 12 or in a remote storage medium such as the cloud. The memory can be implemented using any computer-readable storage medium, such as random-access memory (RAM), a Universal Serial Bus (USB) thumb drive, a data storage drive, or any other type of computer storage media.

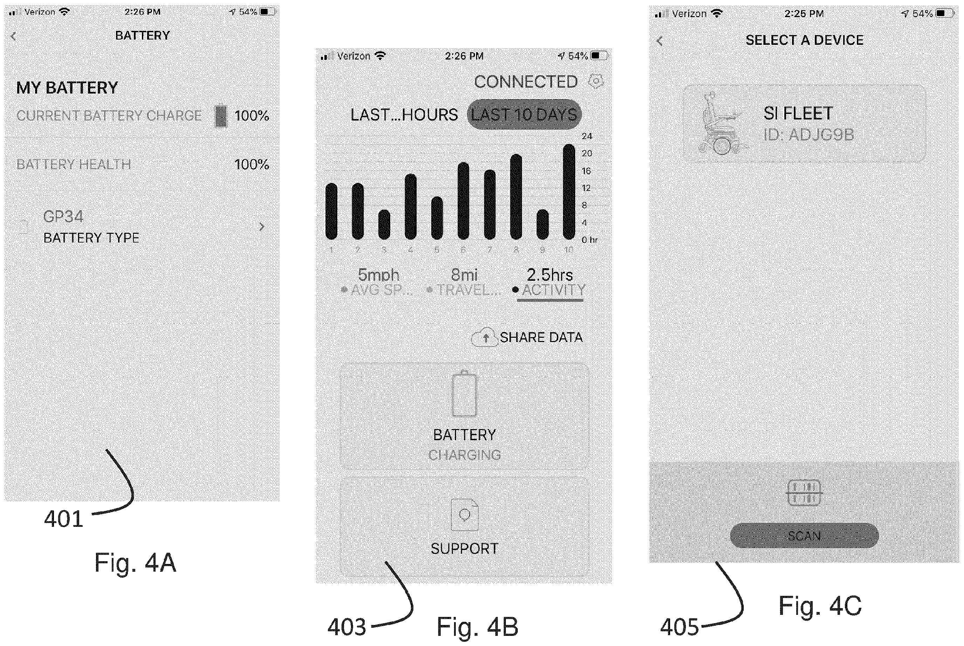

The battery 14 may be connected to one or more sensors such as voltage sensors 34, current sensors 36, and temperature sensors 40 to measure battery parameters. Sensors related to battery charge information, such as charger output, and charge time from an initial voltage measurement to a predetermined voltage level or range, for example 12.8-13.4 volts may also be inputs to the NNM 100. In addition, other sensors or information that are indicative of wheelchair operational duty cycles between charging events may be used by the NNM 100 to assess SoC and SoH of the battery. An example of an output of information relating to the battery 14, for example a SoC of 100% and a SoH of 100%, is shown in Fig. 4A by screenshot 401 of display 50. Further information on the battery 14 and the personal mobility vehicle 10, like an average speed of 5 mph (8,046 km/h), a travel distance of 8 mi (12,87 km) and an activity of 2.5 hours can be displayed on display 50 as shown in Fig. 4B by screenshot 403. These data can be displayed for different time spans, for example for the last 10 days or a specific number of last hours.

The NNM 100 comprises a plurality of neurons organized into layers such as, for example, an input layer 102, a hidden layer 104, and an output layer 106 as shown in Fig. 2. The input layer 102 receives input data from the various sensors such as the one or more voltage sensors 34, one or more current sensors 36, the (motor) speed sensors 38, and one or more of the heat and/or temperature sensors 40, or any of various combinations thereof. The input layer 102 may include a plurality of neurons such as a first neuron 108, a second neuron 110, and a third neuron 112. The hidden layer 104 and the output layer 106 may include any number of neurons within each layer necessary for organizing and processing input data and calculating system operational outputs. In a typical NNM 100, the sensor data may be input data used in individual input neurons, such as the voltage sensor data 34 connected to the first input data neuron 108, the current sensor data 36 connected to the second input neuron 110 and the motor speed sensor data connected to the third input neuron 112. For both State of Health (SOH) and battery State of Charge (SOC) models the single output node model is preferred. In a single output node configuration, the model is mapping the sensor data or derived input data to the output resulting in the highest accuracy and lowest errors (relative to multiple output node models). The use of a single output node model is preferred when there is only one output metric possible or desired.

A multiple output node neural network model, as one example is illustrated in Fig. 2, is often used in cases where more than one output metric is possible and it is of interest to determine the best one. While the single output model is not capable of making any decisions, the multiple output model has this capability. For example, a multiple output NN model may have two outputs. Each is normalized to have an output from 0 to 1, and the sum of the outputs is always 1. In use, the output with the higher value is the one that has been 'decided' by the model. It will generally require a microprocessor or computer to evaluate the multiple outputs and report the output favored. The ability of the multiple output NN model would be possible in the case where several wheelchair subsystems may interact with each other, making it desirable to determine which of the subsystems are dominating the chair performance loss. For example, the multiple output NN model may have outputs related to the health of each subsystem and would be able to decide which subsystem was the most important for declining performance of the wheelchair as a whole.

For purposes of illustration as shown in Fig. 2, in one embodiment the data from the voltage sensor 34 may be used by the first neuron 108. Data from the current sensor 36 may be used by the second, or third neurons 110 and 112. Data of the motor speed sensor 38 may be used by the other of the second or third neuron 110 or 112. Data from the heat and/or temperature sensor 40 may be used by the fourth neuron 114. The connections of the sensor data to neurons in the input layer 102 are shown for purposes of illustration, as other topologies also fall within the scope of the invention. The hidden layer 104 generally represents weighted combinations of the input neurons and the output layer 106 is a final output which may be a SoH, SoC, or other output indicative of subsystem operation. The outputs may be sent to a display, such as a joystick screen or smartphone to alert the user to current system status and potential operational anomalies.

In operation, the NNM 100 processes the input data to monitor and diagnose a subsystem of the personal mobility vehicle. Typically during normal operation when one or more of the subsystems of the personal mobility vehicle are functioning properly, the NNM 100 gathers parameter data from the one or more subsystems using the plurality of sensor data operatively coupled to the input layer 102. Next, the NNM 100 processes the received parameter data to determine an expected result of the data for the one or more subsystems. The microcontroller stores the results in the controller memory or remote data storage location. For example, the expected result may relate to a specific subsystem state of a singular component.

Fig. 4C illustrates a scenario where the wheelchair 10 is part of a fleet of wheelchairs that may be monitored and diagnosed remotely.

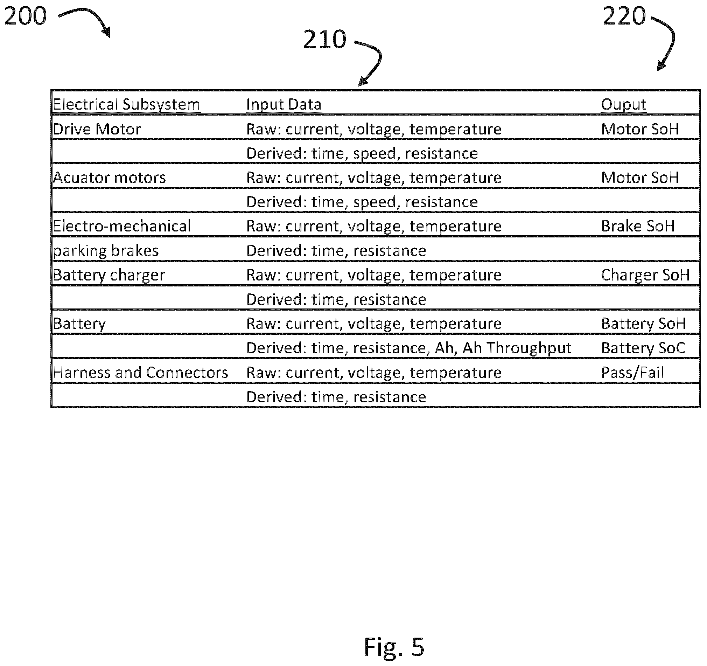

Fig. 5 is a table of electrical subsystems 200, associated input data parameters 210, and predictive output assessments 220. More specifically, the table provides an association of various electrical subsystems 200 of wheelchair 10 with input data 210 that are measured or derived to determine the State of Health (SoH) using the applicable NNM. The interactions of these elements with other subsystems can inform and pinpoint if anomalous data is indicative of a true internal component issue, a larger system interaction problem, or just normal operation where the subsystem health is not yet impacting the chair performance. By having the added capability to look at other subsystem data points such as joystick control position and drain rate of the batteries 14, and accurate life predictions can be determined. For example, if the physical connection between the battery charging unit 20 and the battery 14 is faulty, a regulator in the battery charging unit 20 may indicate that the battery 14 is fully charged, but the SoC of the battery 14 may indicate otherwise. The lack of full battery charge may cause higher temperatures in the brushed DC motor 16 because of a lower voltage and an associated higher current draw to maintain motor torque/speed.

Returning now to Fig. 4C, showing a display output screenshot 405 of display 50, in addition to individual unit monitoring and health assessments, fleet management based on multiple unit data sets can improve design by pinpointing component issues and help sort out whether failures are based on design or manufacturing and shipment lot considerations. The gathering and manipulation of data can be done locally by the wheelchair controller or transmitted to a central processing facility via cloud-based data exchange.

The principle and mode of operation of this invention have been explained and illustrated in its preferred embodiment. However, it must be understood that this invention may be practiced otherwise than as specifically explained and illustrated without departing from its spirit or scope.

Further advantageous embodiments of the invention are described with the help of the following examples:
1. A method of assessing an operational state of health of a personal mobility vehicle, the method comprising the steps of:
   training a neural network model with training input data reflecting a range of operating states of at least one of a component, a subsystem, or a wheelchair system of the personal mobility vehicle;
   gathering operating input data during operation from the one or more subsystems using at least one sensor to receive data measurements associated with an operational state of the one or more subsystems;
   processing the operating input data in a microcontroller to generate additional derived input data using both the data measurements associated with the operational state of one or more subsystems and a time based input, and
   providing the derived input data to the neural network model and calculating an output indicative of the operational state of health for the at least one of the component, subsystem, or wheelchair system.
2. The method of example 1 wherein the step of gathering operating input data includes the at least one sensor configured as one of a voltage sensor, a current sensor, a temperature sensor, or a motor speed sensor.
3. The method of example 1 wherein the step of gathering operating input data includes the at least one sensor configured as a plurality of sensors provided as one or more voltage sensors, one or more current sensors, one or more temperature sensors, and/or one or more motor speed sensors.
4. The method of example 1 wherein the step of gathering operating input data includes the one or more subsystems configured to include a battery, a battery charger, one or more drive motors, one or more actuators, one or more electro-mechanical brakes, or one or more wiring harness and connectors.
5. The method of example 1 wherein the training step includes the neural network model being trained to reflect the range of operation states of the component configured as one of a battery, a battery charger, a drive motor, an actuator, an electro-mechanical brake, or a wiring harness and connectors.
6. The method of example 1 wherein the providing step includes the output comprising an expected range of values for SoH or SoC of 0 to 100% for a subsystem including a battery, a battery charger, a drive motor, an actuator, an electro-mechanical brake, or a wiring harness and connectors.
7. The method of example 1 wherein the personal mobility vehicle is a manually propelled wheelchair and the step of gathering input data includes the one or more subsystems configured to include a manually propelled drive wheel, a tire, or a bearing.
8. The method of example 1 wherein the personal mobility vehicle is a manually propelled wheelchair and the step of using a sensor includes using the at least one sensor configured as one of a force sensor, an attitude sensor, a temperature sensor, or a tire pressure sensor.
9. The method of example 1 wherein the training step includes the neural network model configured as a single output neural network model.
10. The method of example 1 wherein the training step includes the neural network model configured as a multiple output neural network model.
11. A personal mobility vehicle comprising:
   a microcontroller;
   a neural network model residing in or accessed by the microcontroller and configured to recognize an operating state of at least one of a component, a subsystem, or a wheelchair system of the personal mobility vehicle;
   at least one sensor configured to transmit data measurements associated with an operational state of the one or more subsystems, the data measurements gathered as input data processed by the microcontroller to generate additional derived input data from the data measurements and a time based input; and
   an output calculated by the neural network model indicative of the operational state of health for the at least one of the component, subsystem, or wheelchair system.
12. The personal mobility vehicle of example 11 wherein the at least one sensor is configured as one of a voltage sensor, a current sensor, a temperature sensor, or an attitude sensor.
13. The personal mobility vehicle of example 11 configured as a power driven wheelchair having at least one drive motor, a battery, and an input device, the at least one sensor configured as a plurality of sensors provided as one or more voltage sensors, one or more current sensors, one or more temperature sensors, and/or one or more motor speed sensors.
14. The personal mobility vehicle of example 13 wherein the plurality of sensors measures a voltage level and a current output from at least one location of a battery terminal, a charging unit output terminal or an electric motor input connection, and the neural network model calculating a battery state of charge.
15. The personal mobility vehicle of example 14 wherein the sensor measurements are taken over a time period and the neural network model determines a battery state of health.
16. The personal mobility vehicle of example 15 wherein the neural network model is configured as a single output model.
17. The personal mobility vehicle of example 11 wherein the data measurements are a drive motor speed level and at least one of a drive motor current draw and a drive motor operating temperature, the output being indicative of a drive motor state of health condition.
18. The personal mobility vehicle of example 11 configured as a manually propelled wheelchair comprising of two main propulsion wheels and two caster wheels and the at least one sensor is an inertial sensor configured to measure an acceleration force.
19. The personal mobility vehicle of example 18 wherein the at least one sensor further includes a force sensor and a speed sensor associated with each of the main propulsion wheel pushrims, the output being indicative of a rolling resistance of the manually propelled wheelchair.
20. The personal mobility vehicle of example 11 configured as a manually propelled wheelchair including a power add-on unit and a battery, the at least one sensor being a plurality of sensors configured to measure a voltage level and a current output from at least one location of a battery terminal, a charging unit output terminal or an electric motor input connection, and the neural network model calculating a battery state of charge.

### Reference Sign List

- 10: personal mobility vehicle
- 12: controller
- 14: battery
- 16: drive motor
- 18: joystick
- 20: charging unit
- 22: actuator
- 24: brushes
- 26: commutator
- 28: winding
- 30: permanent magnet
- 32: bearing
- 34: voltage sensor
- 36: current sensor
- 38: speed sensor
- 40: temperatur sensor
- 50: display

- 100: neural network model (NNM)
- 102: input layer
- 104: hidden layer
- 106: output layer
- 108: neuron
- 110: neuron
- 112: neuron
- 114: neuron
- 200: electrical subsystem
- 210: input data paramter
- 220: predictive output assessment

- 401: screenshot
- 403: screenshot
- 405: screenshot

## Claims

1. A method of assessing an operational state of health of a personal mobility vehicle (10), preferably conducted at least in part on a microcontroller or the like of the personal mobility vehicle (10), the method comprising the steps of:
gathering operating input data during operation from one or more component, subsystem, and/or wheelchair system using at least one sensor (34, 36, 38, 40) to receive data measurements associated with an operational state of the one or more component, subsystem, and/or wheelchair system;
processing the operating input data in a microcontroller (12) to generate additional derived input data using both the data measurements associated with the operational state of one or more component, subsystem, and/or wheelchair system and a time based input;
providing the derived input data to a neural network model (100); and
calculating an output indicative of the operational state of health for the at least one of the one or more component, subsystem, and/or wheelchair system, optionally using the neural network model (100),
wherein the neural network model (100) is trained with and/or using a training data set.

2. The method of claim 1, wherein
the training data set are training input data reflecting a range of operating states of at least one of a component, a subsystem, and/or a wheelchair system of the personal mobility vehicle (10) and/or the training data set comprises:
(i) data reflecting derived input data for range of operating states of the one or more component, subsystem, and/or wheelchair system; and
(ii) data indicative of the operational state of health of the at least one of the component, subsystem, and/or wheelchair system corresponding to each data reflecting derived input data for the range of operating states, wherein preferably the data reflecting derived input data for a range of operating states and data indicative of the operational state of health form data pairs for the one or more component, subsystem, and/or wheelchair system and/or for the operational states of health; and/or
wherein
the step of gathering operating input data includes
(i) the at least one sensor configured as one of a voltage sensor (34), a current sensor (36), a heat and/or temperature sensor (40), a speed sensor (38), an accelerometer, a gyrometer, a force sensor, an attitude sensor, a torque sensor, an electrical and/or mechanical resistance sensor, a position sensor, in particular sensing the position of a control device, optionally in form of a joystick, a tire pressure sensor, and/or a motor speed sensor;
(ii) the at least one sensor configured as a plurality of sensors provided as one or more voltage sensors, one or more current sensors, one or more heat and/or temperature sensors, one or more speed sensors (38), one or more accelerometers, one or more gyrometers, one or more force sensors, one or more attitude sensors, one or more torque sensors, one or more electrical and/or mechanical resistance sensors, one or more position sensors, in particular sensing the position of one or more control devices, optionally in form of one or more joysticks, one or more a tire pressure sensors, and/or one or more motor speed sensors; and/or
(iii) the one or more subsystems configured to include a battery (14), a battery bank, optionally having batteries connected in series and/or parallel, a lead acid battery, a wet or flooded battery, an absorbent glass mat, AGM, battery, a gel battery, a lithium-ion battery, a nickel-metal-hydride, NiMH, battery, a nickel cadmium battery, a battery charger, a charging unit (20), one or more drive motors (16), one or more actuators (22), one or more electro-mechanical brakes, a control device, a joystick (18), or one or more wiring harness and connectors.

3. The method of claim 1 or 2, wherein
training of the neural network model (100) comprises the neural network model (100) being trained to reflect the range of operation states of the one or more component, subsystem, and/or wheelchair system configured as one of the battery (14), the battery bank, the battery charger, the charging unit (20), the drive motor (16), the actuator (20), the electro-mechanical brake, the control device, the joystick (18), or the wiring harness and connectors and/or
wherein the neural network model (100) is static, in particular is not modified and/or re-trained based on data received during operation.

4. The method of one of the preceding claims, wherein
the providing step includes the output comprising an expected range of values for SoH or SoC of 0 to 100% for the one or more component, subsystem, and/or wheelchair system, in particular including the battery (14), the battery charger, the charging unit (20), the battery bank, the drive motor, the actuator, the electro-mechanical brake, the control device, the joystick (18), or the wiring harness and connectors.

5. The method of one of the preceding claims, wherein
the personal mobility vehicle (10) is a manually propelled wheelchair and the step of gathering input data includes the one or more component, subsystem and/or wheelchair system configured to include a manually propelled drive wheel, a tire, and/or a bearing.

6. The method of one of the preceding claims, wherein
the personal mobility vehicle (10) is a manually propelled wheelchair and the step of using the at least one sensor includes using a sensor configured as a force sensor, an attitude sensor, a temperature sensor (40), and/or a tire pressure sensor.

7. The method of one of the preceding claims, wherein
the training step includes the neural network model (100) configured as a single output neural network model.

8. The method of one of the claims 1 to 7, wherein
the training step includes the neural network model (100) configured as a multiple output neural network model.

9. A personal mobility vehicle (10) comprising:
a microcontroller (12);
a neural network model (100) residing in or accessed by the microcontroller (12) and/or configured to recognize an operating state of at least one of a component, a subsystem, and/or a wheelchair system of the personal mobility vehicle (10);
at least one sensor (34, 36, 38, 40) configured to transmit data measurements associated with an operational state of the one or more component, subsystem, and/or wheelchair system, the data measurements gathered as input data processed by the microcontroller (12) to generate additional derived input data from the data measurements and a time based input; and
an output calculated by the neural network model (100) indicative of the operational state of health for the at least one of the component, subsystem, and/or wheelchair system.

10. The personal mobility vehicle of claim 9, wherein
the at least one sensor is configured as one of a voltage sensor (34), a current sensor (36), a heat and/or temperature sensor (40), a speed sensor (38), an accelerometer, a gyrometer, a force sensor, a torque sensor, an electrical and/or mechanical resistance sensor, a position sensor, in particular sensing the position of a control device, optionally in form of a joystick, a tire pressure sensor, a motor speed sensor, and/or an attitude sensor.

11. The personal mobility vehicle of claim 9 or 10,
configured as a power driven wheelchair (10) having at least one drive motor (16), a battery (14), and an input device (18), the at least one sensor configured as a plurality of sensors provided as one or more voltage sensors, one or more current sensors, one or more heat and/or temperature sensors, one or more speed sensors (38), one or more accelerometers, one or more gyrometers, one or more force sensors, one or more attitude sensors, one or more torque sensors, one or more electrical and/or mechanical resistance sensors, one or more position sensors, in particular sensing the position of one or more control devices, optionally in form of one or more joysticks, one or more a tire pressure sensors, and/or one or more motor speed sensors.

12. The personal mobility vehicle of claim 11, wherein
the plurality of sensors measures a voltage level and a current output from at least one location of a battery terminal, a charging unit output terminal, a charging unit (20) output terminal, and/or an electric motor input connection, and the neural network model (100) calculating a battery state of charge, wherein preferably the sensor measurements are taken over a time period and the neural network model (100) determines a battery state of health, wherein optionally the neural network model (100) is configured as a single output model.

13. The personal mobility vehicle of one of the claims 9 to 12, wherein the data measurements are a drive motor speed level and/or at least one of a drive motor current draw and a drive motor operating temperature, and/or the output being indicative of a drive motor state of health condition.

14. The personal mobility vehicle of one of the claims 9 to 13,
configured as a manually propelled wheelchair comprising at least two main propulsion wheels and/or two caster wheels and/or the at least one sensor is an inertial sensor configured to measure an acceleration force, wherein optionally the at least one sensor further includes a force sensor and/or a speed sensor associated with each of the main propulsion wheel pushrims, and/or the output being indicative of a rolling resistance of the manually propelled wheelchair.

15. The personal mobility vehicle of one of the claims 9 to 14,
configured as a manually propelled wheelchair, in particular including a power add-on unit and/or a battery, the at least one sensor being preferably a plurality of sensors configured to measure a voltage level and/or a current output from at least one location of a battery terminal, a charging unit output terminal and/or an electric motor input connection, and/or the neural network model (100) calculating a battery state of charge.
